# EUROPEAN PATENT APPLICATION

(11) **EP 4 822 531 A1**
(43) Date of publication of application: **14.10.2026**
(21) Application number: 25797123.4
(22) Date of filing: 11.03.2025
(51) Int. Cl.: G06F 9/50

(54) **VIRTUAL RESOURCE ALLOCATION METHOD AND APPARATUS, COMPUTER DEVICE, COMPUTER READABLE STORAGE MEDIUM, AND COMPUTER PROGRAM PRODUCT**

(30) Priority: 30.04.2024 CN 202410548004
(71) Applicant: Moore Threads Technology (Shanghai) Co., Ltd., Shanghai 201203 (CN)
(72) Inventor: LI, Jie, Shanghai 201203 (CN); WANG, Jin, Shanghai 201203 (CN)
(74) Representative: Eisenführ Speiser
(86) International application number: PCT/CN2025/081873
(87) International publication number: WO 2025/227946

(57) **Abstract**

Disclosed in embodiments of the present disclosure are a virtual resource allocation method and apparatus, a computer device, a computer readable storage medium, and a computer program product. The virtual resource allocation method comprises: in response to a virtual resource creation request, determining, from a virtual function resource pool, a target number of target virtual function resources that meet the virtual resource creation request, wherein the virtual function resources in the virtual function resource pool are located on a graphics card supporting a single root input/output virtualization (SR-IOV) technology; and on the basis of the target number of target virtual function resources, creating a target virtual graphics processing unit device, and on the basis of the target virtual graphics processing unit device, running a target virtual machine. In this way, under the SR-IOV technology, a target virtual graphics processing unit device having different video memory resource sizes may be created on the basis of virtual resource acquisition requirements, thereby meeting various requirements of different virtual machines for video memory resources provided by virtual function resources.

## Description

### CROSS-REFERENCE TO RELATED APPLICATION

Embodiments of the present disclosure are based on Chinese Patent Application No. 202410548004.7, filed on April 30, 2024, titled "Method for allocating virtual resources, Apparatus, Device, Storage Medium, and Program Product," and claim priority to this Chinese patent application, the entire contents of which are incorporated herein by reference.

### TECHNICAL FIELD

The present disclosure relates to, but is not limited to, the field of computer technology, and in particular, to a method and apparatus for allocating virtual resources, a computer device, a computer-readable storage medium, and a computer program product.

### BACKGROUND

In device virtualization schemes based on a Single Root Input/Output Virtualization (SR-IOV) technology, due to Peripheral Component Interconnect-Special Interest Group (PCI-SIG) specifications, the video memory capacities of Virtual Functions (VFs) are identical, and one VF can only be allocated to one virtual machine for use. This means that only VFs of the same video memory capacity may be allocated to different virtual machines. However, the video memory resource sizes required by different virtual machines are usually different. Therefore, existing device virtualization schemes cannot meet the varying demands of different virtual machines for video memory resources.

### SUMMARY

In view of this, the embodiments of the present disclosure provide at least a method and apparatus for allocating virtual resources, a computer device, a computer-readable storage medium, and a computer program product.

The technical solutions of the embodiments of the present disclosure are implemented as follows:

In one aspect, an embodiment of the present disclosure provides a method for allocating virtual resources. The method for allocating virtual resources comprises: in response to a virtual resource creation request, determining a target number of target virtual function resources that meet the virtual resource creation request from a virtual function resource pool; wherein the virtual function resources in the virtual function resource pool are located on a graphics card supporting a Single Root Input/Output Virtualization technology; creating a target virtual graphics processing unit device based on the target number of target virtual function resources, and running a target virtual machine based on the target virtual graphics processing unit device.

In another aspect, an embodiment of the present disclosure provides an apparatus for allocating virtual resources. The apparatus for allocating virtual resources comprises: a determination part, configured to determine, in response to a virtual resource creation request, a target number of target virtual function resources that meet the virtual resource creation request from a virtual function resource pool, wherein the virtual function resources in the virtual function resource pool are located on a graphics card supporting a Single Root Input/Output Virtualization technology; and a creation part, configured to create a target virtual graphics processing unit device based on the target number of target virtual function resources, and run a target virtual machine based on the target virtual graphics processing unit device.

In yet another aspect, an embodiment of the present disclosure provides a computer device, comprising a memory and a processor, wherein the memory stores a computer program executable on the processor, and the processor, when executing the program, is configured to implement some or all of the steps in the above method.

In yet another aspect, an embodiment of the present disclosure provides a computer-readable storage medium, on which a computer program is stored, and the computer program, when executed by a processor, implements some or all of the steps in the above method.

In yet another aspect, an embodiment of the present disclosure provides a computer program, comprising computer-readable code. The computer-readable code, when running in a computer device, causes a processor in the computer device to execute partial or all steps for implementing the above method.

In yet another aspect, an embodiment of the present disclosure provides a computer program product. The computer program product comprises a non-transitory computer-readable storage medium storing a computer program. The computer program, when read and executed by a computer, implements some or all of the steps in the above method.

In the embodiments of the present disclosure, under the SR-IOV technology, by installing virtualization driver software onto a computer device, the computer device can execute the method for allocating virtual resources of the embodiments of the present disclosure. Upon receiving a virtual resource creation request, the computer device determines a target number of target virtual function resources (VFs) that meet the virtual resource creation request from a virtual function resource pool, creates a target virtual graphics processing unit device based on the target number of target virtual function resources, and then allocates the target virtual graphics processing unit device to a target virtual machine. In this way, under SR-IOV technology, target virtual graphics processing unit devices with different video memory resource sizes (video memory resources provided by VFs) may be created according to a virtual resource acquisition requirement, meeting the diverse needs of different virtual machines for video memory resources provided by VFs. In related technologies, modifying the video memory resource size corresponding to a VF requires shutting down all virtual machines and rebooting the server; whereas the embodiments of the present disclosure integrate a target number of target virtual function resources to obtain a target virtual graphics processing unit device that meets the virtual resource creation requirement. This entire process may be completed without stopping the operation of all virtual machines and rebooting the server, and the video memory capacities of the different created target virtual graphics processing unit devices can coexist on the same graphics card.

It should be understood that the above general description and the following detailed description are exemplary and explanatory only, and do not limit the technical solutions of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the technical solutions of the present disclosure.
FIG. 1 is a first schematic flowchart of a method for allocating virtual resources according to an embodiment of the present disclosure.
FIG. 2 is a second schematic flowchart of a method for allocating virtual resources according to an embodiment of the present disclosure.
FIG. 3 is a third schematic flowchart of a method for allocating virtual resources according to an embodiment of the present disclosure.
FIG. 4 is a schematic implementation diagram of a physical connection relationship between VFs and compute core groups within a chip microarchitecture in a method for allocating virtual resources according to an embodiment of the present disclosure.
FIG. 5 is a schematic implementation diagram of an allocation sequence of vGPUs in a method for allocating virtual resources according to an embodiment of the present disclosure.
FIG. 6 is a structural block diagram of an apparatus for allocating virtual resources according to an embodiment of the present disclosure.
FIG. 7 is a schematic hardware entity diagram of a computer device according to an embodiment of the present disclosure.

### DETAILED DESCRIPTION

To make the objectives, technical solutions, and advantages of the present disclosure clearer, the technical solutions of the present disclosure will be further described in detail below with reference to the accompanying drawings and embodiments. The described embodiments should not be construed as a limitation to the present disclosure. All other embodiments obtained by those of ordinary skill in the art without creative efforts shall fall within the protection scope of the present disclosure.

In the following description, reference is made to "some embodiments," which describes a subset of all possible embodiments. However, it may be understood that "some embodiments" may be the same subset or different subsets of all possible embodiments, and may be combined with each other without conflict.

The terms "first/second/third" involved are merely used to distinguish similar objects and do not represent a specific ordering of the objects. It may be understood that "first/second/third" may be interchanged in specific sequence or chronological order where permitted, so that the embodiments of the present disclosure described herein may be implemented in sequences other than those illustrated or described herein.

Unless otherwise defined, all technical and scientific terms used herein have the same meaning as commonly understood by those skilled in the technical field to which the present disclosure belongs. The terms used herein are for the purpose of describing the present disclosure only and are not intended to limit the present disclosure.

To better understand the virtual resource creation method provided by the embodiments of the present disclosure, the schemes in related technologies are explained first.

Graphics Processing Unit (GPU) virtualization is a technology that partitions a physical GPU into multiple Virtual Graphics Processing Units (vGPUs) through software and hardware partitioning techniques, allowing each virtual machine to exclusively occupy one vGPU, thereby achieving efficient allocation and use of resources.

Currently, whether for network cards, graphics cards, or other hardware devices, it is an industry consensus that integrating virtualization functions during the chip design phase can significantly improve virtualization performance. Among them, SR-IOV is the most mainstream.

In device virtualization schemes based on SR-IOV, a device provides two types of Peripheral Component Interconnect Express (PCIe) functions, namely Physical Function (PF) and Virtual Function (VF). The PF contains complete PCIe functions, while the VF only contains lightweight PCIe functions.

When using VFs to create vGPUs, according to PCI-SIG specifications, the Base Address Register (BAR) space size of all VFs is the same. The BAR is used to specify the base address of the VF in the system memory, and this base address is the starting point for the VF to access its allocated memory space. For example, for a graphics card that supports SR-IOV technology and contains 32 Gigabytes (GB) of video memory, if the graphics card supports 32 VFs, each VF will have 1GB of video memory. If a vGPU created by any VF is allocated to a virtual machine, that virtual machine will have a graphics card containing 1GB of video memory.

Limited by hardware design, the video memory capacity (video memory resource size) that a VF may be allocated is defined during the chip design phase. For instance, the video memory capacity allocable to a VF might have options like 512 Megabytes (MB) or 1GB. This means a VF can only be allocated 512MB or 1GB of video memory, and cannot be allocated capacities other than 512MB or 1GB. However, firstly, the video memory capacity demands of virtual machine users are not fixed; different users may require video memory capacities of 4GB, 6GB, 8GB, etc., which cannot be provided in standard SR-IOV virtualization schemes. Secondly, if the video memory capacity of a VF needs to be changed, all running virtual machines have to be shut down, the GPU driver has to be uninstalled from the virtual machine manager, and then the VF video memory size may be switched, and virtualization is restarted.

In related technologies, the video memory capacity of VFs uses an equal division method, and it is impossible to define VFs of different sizes on the same graphics card. For example, allocating 1GB of video memory to VF1 and 4GB to VF2 violates the PCI-SIG specification and cannot be accomplished. However, users require a more flexible allocation method for vGPU video memory capacity; for example, allocating 1GB of video memory to vGPU1 and 4GB to vGPU2. Existing schemes cannot meet this requirement.

The VF video memory capacity in related technologies is limited by hardware resources, generally offering only one or two capacity options. To make a graphics card support the allocation of different video memory resource sizes, all running virtual machines has to be shut down, and the server has to be restarted or the graphics card has to be reset in supported systems. This has major drawbacks, severely impacting the speed at which users deploy virtual machines and affecting currently operating virtual machines.

Patent Application No. CN202311037854.2 is directed to a video memory allocation method for virtualization scenarios, primarily addressing the GPU virtualization scheme under the mdev framework, where the host driver can only select the same type of video memory capacity for all virtual machines and cannot make diverse selections based on different user workload demands. In contrast, the present disclosure solves the limitation brought about by the PCI-SIG specification regarding VF video memory capacity in hardware-assisted virtualization SR-IOV technology: the problem that the video memory capacity provided by VFs to virtual machines is fixed, and adjustments are extremely cumbersome.

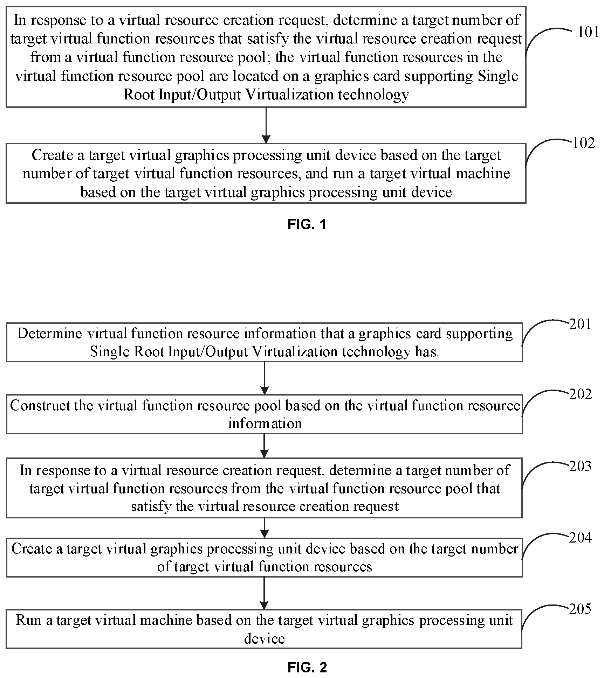

An embodiment of the present disclosure provides a method for allocating virtual resources, which may be executed by a processor of a computer device. The computer device may refer to a server, a laptop computer, a tablet computer, a desktop computer, a smart TV, a set-top box, or a mobile device (such as a mobile phone, a portable video player, a personal digital assistant, a dedicated messaging device, a portable gaming device, etc.) with data processing capabilities. As shown in FIG. 1, the method includes the following steps 101 to 102.

At step 101, in response to a virtual resource creation request, a target number of target virtual function resources that meet the virtual resource creation request is determined from a virtual function resource pool. Herein, the virtual function resources in the virtual function resource pool are located on a graphics card supporting a Single Root Input/Output Virtualization technology.

The computer device may have virtualization driver software installed, which is used to execute the method for allocating virtual resources of the embodiments of the present disclosure. The virtualization driver software may include Host driver software and Guest driver software. The Host driver software is installed in the Virtual Machine Monitor (VMM) of the computer device, and the Guest driver software is installed in the virtual machine (Guest).

The virtual resource creation request is used to create a vGPU device having a certain virtual resource size in order to run a target virtual machine based on the vGPU device. Generally, the virtual resource creation request is used to allocate virtual resources (vGPU) to a target virtual machine. The target virtual machine is a virtual machine with a virtual resource acquisition requirement. This target virtual machine may be a newly created virtual machine on the computer device, or a newly created virtual machine on another device other than the computer device, which is not limited in the embodiment of the present disclosure in this regard.

The virtual function resource pool is used to manage virtual resources under SR-IOV technology. In a feasible implementation manner, the virtual function resources may be VFs located on a graphics card supporting the SR-IOV technology, where the VF may have a video memory capacity of 512MB or 1GB, which can specifically be determined according to the video memory capacity of each VF under the SR-IOV technology.

Because the video memory capacity of a single VF is fixed under the SR-IOV technology, the embodiment of the present disclosure takes a VF as a video memory resource unit for performing video memory resource allocation. The virtual function resource pool includes multiple VFs and may be referred to as a VF resource pool.

The target number refers to the number of virtual function resources (VFs) required to meet the current virtual resource acquisition requirement. The target number of target virtual function resources refers to one or more virtual function resources (VFs) capable of meeting the current virtual resource acquisition requirement. When constructing a vGPU, what is actually required is the video memory resources that the target number of target virtual function resources has.

In a feasible implementation manner, the specific implementation of acquiring a virtual resource creation request may be: a user sends a virtual resource creation request to the computer device via specific software; specifically, the user can select the currently required video memory resource size through the human-machine interface of the specific software, thereby sending a virtual resource creation request containing the currently required video memory resource size. Because the video memory resources of a graphics card are equally divided among VFs under the SR-IOV technology, the currently required video memory resource size may refer to the currently required number of VFs.

In another feasible implementation manner, the virtual resource creation request may further include the currently required computing resource size. Because computing resources are provided by compute core groups, the computing resource size may refer to the computing resource size of a compute core group.

In some embodiments, the specific implementation for constructing a virtual function resource pool may be: determining virtual function resource information that a graphics card supporting a Single Root Input/Output Virtualization technology has; and constructing the virtual function resource pool based on the virtual function resource information.

The virtual function resource information may be detailed information about the virtual function resources that a graphics card supporting the SR-IOV technology has. In a feasible implementation manner, the virtual function resource information may be all VF information that a graphics card supporting the SR-IOV technology has. The virtual function resource information may include, but is not limited to, information such as whether a VF has been allocated, which graphics card the VF belongs to, which PF controls the VF, and which compute core group in the chip microarchitecture the VF is connected to.

In a feasible implementation manner, during the initialization phase of the Host driver software, all VF information that the graphics card supporting the SR-IOV technology has is acquired, and a VF resource pool (virtual function resource pool) is established using all the VF information.

In a feasible implementation manner, the specific implementation for determining the target number of target virtual function resources may be: determining the target number of target virtual function resources that meet the virtual resource creation request from idle virtual function resources in the virtual function resource pool, where a sum of the sizes of the target number of target virtual function resources is identical to the currently required virtual function resource size.

At step 102, a target virtual graphics processing unit device is created based on the target number of target virtual function resources, and a target virtual machine is run based on the target virtual graphics processing unit device.

The target virtual graphics processing unit device refers to a vGPU device. Running a target virtual machine based on the target virtual graphics processing unit device means allocating the target virtual graphics processing unit device to the target virtual machine for use.

In a feasible implementation manner, when only video memory resources need to be allocated, the specific implementation for creating a target virtual graphics processing unit device may be: integrating the video memory resources that the target number of target virtual function resources has to obtain the target virtual graphics processing unit device.

In another feasible implementation manner, when both video memory resources and computing resources need to be allocated simultaneously, the specific implementation for creating a target virtual graphics processing unit device may be: integrating the target number of target virtual function resources and at least one compute core group that matches the currently required computing resource size to obtain the target virtual graphics processing unit device, where the computing resource size of the at least one compute core group is identical to the currently required computing resource size.

In some embodiments, the specific implementation of "running a target virtual machine based on the target virtual graphics processing unit device" in step 102 may be: passing the target virtual graphics processing unit device through to the target virtual machine via a passthrough component, so as to run the programs of the target virtual machine based on the target virtual graphics processing unit device.

The passthrough component is configured to pass the created target virtual graphics processing unit device through to a virtual machine. In a feasible implementation manner, the passthrough component may be a Virtual Function Input/Output for Peripheral Component Interconnect (VFIO-PCI) framework. The VFIO-PCI framework is a kernel-level component that utilizes hardware I/O virtualization capabilities (such as Intel's VT-d and AMD's AMD-Vi) to provide direct access to devices. VFIO-PCI allows vGPUs to be directly passed through to virtual machines, such that the virtual machine can directly access the configuration space and registers of the vGPU without going through a driver program.

By way of example, if the virtual resource creation request indicates a current requirement for 2GB of video memory resources, and each VF has a video memory capacity of 1GB, the virtualization driver software, upon receiving the virtual resource creation request, can select two VFs from the virtual function resource pool, create a vGPU based on these two VFs, and pass the created vGPU through to the virtual machine that sent the virtual resource creation request.

It should be noted that the embodiments of the present disclosure do not change the existing definition of a VF. Based on the existing definition of a VF, they introduce the capability to determine the required number of VFs based on user demand in the virtual resource creation request, and to create a vGPU meeting the user demand based on the required number of VFs.

In the embodiments of the present disclosure, under SR-IOV technology, by installing virtualization driver software onto a computer device, the computer device can execute the method for allocating virtual resources of the embodiments of the present disclosure. Upon receiving a virtual resource creation request, the computer device determines a target number of target virtual function resources (VFs) that meet the virtual resource creation request from a virtual function resource pool, creates a target virtual graphics processing unit device based on the target number of target virtual function resources, and then allocates the target virtual graphics processing unit device to a target virtual machine. In this way, under the SR-IOV technology, target virtual graphics processing unit devices with different video memory resource sizes (video memory resources provided by VFs) may be created according to the virtual resource acquisition requirement, meeting the diverse needs of different virtual machines for video memory resources provided by VFs. In related technologies, modifying the video memory resource size corresponding to a VF requires shutting down all virtual machines and rebooting the server; whereas the embodiments of the present disclosure integrate a target number of target virtual function resources to obtain a target virtual graphics processing unit device that meets the virtual resource creation requirement. This entire process may be completed without stopping the operation of all virtual machines and rebooting the server, and the video memory capacities of the different created target virtual graphics processing unit devices can coexist on the same graphics card.

An embodiment of the present disclosure provides a method for allocating virtual resources, which may be executed by a processor of a computer device installed with virtualization driver software. As shown in FIG. 2, the method includes the following steps 201 to 205.

At step 201, virtual function resource information that a graphics card supporting a Single Root Input/Output Virtualization technology has is determined.

At step 202, the virtual function resource pool is constructed based on the virtual function resource information.

Herein, the virtual function resources in the virtual function resource pool are located on the graphics card supporting the Single Root Input/Output Virtualization technology.

Herein, the virtual function resource information corresponds to at least one first virtual function resource, and the virtual function resource pool includes a used resource pool and an idle resource pool.

The virtual function resource information corresponds to at least one first virtual function resource, that is, the at least one first virtual function resource refers to all virtual function resources (VFs) corresponding to the virtual function resource information. The virtual function resources in the idle resource pool are all unused (or unallocated) virtual function resources; the virtual function resources in the used resource pool are all used (or allocated) virtual function resources.

In some embodiments, the specific implementation of step 202 may be: dividing, based on the usage status of each first virtual function resource, each first virtual function resource into a used first virtual function resource set and an unused second virtual function resource set; determining, based on the first virtual function resource set and the second virtual function resource set, the used resource pool and the idle resource pool; marking the virtual function resources in the first virtual function resource set with a used state, and marking the virtual function resources in the second virtual function resource set with an unused state.

The virtual function resources in the first virtual function resource set are all used, and the virtual function resources in the second virtual function resource set are all unused.

Dividing the at least one virtual function resource into the used first virtual function resource set and the unused second virtual function resource set facilitates distinguishing which virtual function resources have already been used and which remain unused, thereby facilitating subsequent allocation.

Marking the virtual function resources in the first virtual function resource set with the used state serves to identify whether the virtual function resources in the first virtual function resource set have been used; similarly, marking the virtual function resources in the second virtual function resource set with the unused state serves to identify whether the virtual function resources in the second virtual function resource set are unused; thereby, errors in virtual function resource allocation can be avoided.

In one embodiment, the specific implementation of " determining, based on the first virtual function resource set and the second virtual function resource set, the used resource pool and the idle resource pool" may be: marking the first virtual function resource set with a first identifier, and marking the second virtual function resource set with a second identifier; the first identifier indicates that the corresponding virtual function resources have been used, and the second identifier indicates that the corresponding virtual function resources are unused; taking the marked first virtual function resource set as the used resource pool; taking the marked second virtual function resource set as the idle resource pool. In this case, each virtual function resource in the set is marked by assigning the identifier to the set as a whole.

In some embodiments, the specific implementation of " determining, based on the first virtual function resource set and the second virtual function resource set, the used resource pool and the idle resource pool" may also be: marking each virtual function resource in the first virtual function resource set with a first identifier; the first identifier indicates that the corresponding virtual function resource has been used; marking each virtual function resource in the second virtual function resource set with a second identifier; the second identifier indicates that the corresponding virtual function resource is unused; taking the marked first virtual function resource set as the used resource pool; taking the marked second virtual function resource set as the idle resource pool. In this case, each individual virtual function resource in the set is marked, further improving the accuracy of marking.

In a feasible implementation manner, the first identifier may be 1, and the second identifier may be 0; in this scenario, each virtual function resource in the first virtual function resource set is marked as 1, and each virtual function resource in the second virtual function resource set is marked as 0.

In another feasible implementation manner, the first identifier may be false, and the second identifier may be true; in this scenario, each virtual function resource in the first virtual function resource set is marked as false, and each virtual function resource in the second virtual function resource set is marked as true.

In other embodiments, after acquiring the virtual function resource pool, each virtual function resource in the virtual function resource pool may be enumerated again, and a resource description of each virtual function resource may be acquired to facilitate subsequent resource allocation according to the resource description.

Specifically, determining the resource description of each first virtual function resource; the resource description includes at least one of the location, usage status, control status, or connection status of each first virtual function resource; describing each virtual function resource in the virtual function resource pool according to the resource description of each virtual function resource.

The resource description of each virtual function resource in the virtual function resource pool includes the usage status, location information, control status, and connection status of each virtual function resource.

The usage status of each virtual function resource indicates whether each virtual function resource has been used (or allocated); the location information of each virtual function resource indicates which graphics card each virtual function resource belongs to; the control status of each virtual function resource indicates which PF controls each virtual function resource; the connection status of each virtual function resource indicates which compute core group in the chip microarchitecture each virtual function resource is connected to.

At step 203, in response to a virtual resource creation request, a target number of target virtual function resources that meet the virtual resource creation request is determined from the virtual function resource pool.

The target video memory resource size refers to the currently required size of the video memory resource.

In some embodiments, the specific implementation of step 203 may be: determining a video memory resource size of a single virtual function resource; based on the video memory resource size of the single virtual function resource and the target video memory resource size, determining a target number; determining the target number of virtual function resources from the idle resource pool as the target number of target virtual function resources; wherein the sum of the sizes of the target number of target virtual function resources matches the target video memory resource size.

The sum of the sizes of the target number of target virtual function resources matching the target video memory resource size means that the sum of the sizes of the target number of target virtual function resources is greater than or equal to the target video memory resource size.

In a feasible implementation manner, the specific implementation for determining the video memory resource size of a single virtual function resource may be: during the initialization phase of the Host driver software, determining the video memory resource size of a single virtual function resource; or, determining the video memory resource size of a single virtual function resource through a query command, where the query command is used to acquire the size of the video memory resource that a single VF has.

In a feasible implementation manner, the specific implementation for determining the target number may be: performing a division operation on the target video memory resource size by the video memory resource size of a single virtual function resource to obtain the target number.

At step 204, a target virtual graphics processing unit device is created based on the target number of target virtual function resources.

Due to the special chip microarchitecture of a graphics card, the graphics card has multiple compute core groups internally. There are generally two connection modes: the first mode is that different VFs are bound to different compute core groups. In this case, the virtualization driver program will also record the information binding the VF to the core group into the VF resource description structure, and simultaneously, computing power needs to be allocated to the vGPU during the dynamic allocation of VF resources; the second mode is that all VFs share all compute core groups. In this case, the virtualization driver program does not need to consider computing power allocation when combining VF resources. Therefore, when creating a target virtual graphics processing unit device, the connection relationship between different VFs and different compute core groups must also be considered.

In a feasible implementation manner, the target virtual graphics processing unit device may be created based on the connection relationships between different virtual function resources and different compute core groups, as well as the target number of target virtual function resources.

In a feasible implementation manner, without considering the compute core groups, the specific implementation of step 204 may be: selecting one virtual function resource from the target number of target virtual function resources as a master virtual function resource, and taking the virtual function resources other than the master virtual function resource as slave virtual function resources; creating the target virtual graphics processing unit device based on the master virtual function resource and the slave virtual function resources.

At step 205, a target virtual machine is run based on the target virtual graphics processing unit device.

In a feasible implementation manner, the target virtual graphics processing unit device may be passed through to the target virtual machine via the VFIO-PCI framework, enabling the target virtual machine to run based on the target virtual graphics processing unit device.

In some embodiments, the above step 204 may be implemented through the following steps 2041 to 2042.

At step 2041, an association relationship between the virtual function resources and the compute core groups is determined.

The association relationship between the virtual function resources and the compute core groups indicates the connection mode between different virtual function resources (VFs) and different compute core groups.

In a feasible implementation manner, the association relationship between the virtual function resources and the compute core groups may be determined via manual input. Alternatively, the association relationship between the virtual function resources and the compute core groups may be determined via software testing.

At step 2042, the target virtual graphics processing unit device is created based on the association relationship and the target number of target virtual function resources.

In a feasible implementation manner, in a case where the association relationship indicates that different virtual function resources (VFs) are connected to different compute core groups, one or more compute core groups that meet the virtual resource creation request are determined; and the target virtual graphics processing unit device is created based on the one or more compute core groups and the target number of target virtual function resources. In a case where the association relationship indicates that all virtual function resources (VFs) share all compute core groups, there is no need to allocate computing resources at this time, and the target virtual graphics processing unit device may be created directly based on the target number of target virtual function resources.

In some embodiments, when different virtual function resources are connected to different compute core groups, the above step 2042 may be implemented through the following steps 2042a to 2042b.

At step 2042a, in the case where the association relationship is that different virtual function resources are connected to different compute core groups, at least one first compute core group matching the target computing resource size is determined.

The at least one first compute core group refers to one or more compute core groups matching the target computing resource size. The at least one first compute core group matching the target computing resource size means that the computing resource size of the at least one first compute core group is greater than or equal to the target computing resource size, that is, the at least one first compute core group is capable of meeting the current demand for computing resources.

In a feasible implementation manner, the specific implementation of "determining at least one first compute core group matching the target computing resource size" may be: in a case where a sum of the computing resource sizes of at least one second compute core group corresponding to the target number of target virtual function resources matches the target computing resource size, taking the at least one second compute core group as the at least one first compute core group; in a case where the sum of the computing resource sizes of the at least one second compute core group corresponding to the target number of target virtual function resources does not match the target computing resource size, determining at least one fourth compute core group from at least one idle third compute core group, and taking the at least one second compute core group and the at least one fourth compute core group as the at least one first compute core group; wherein the sum of the computing resource sizes of the at least one second compute core group and the at least one fourth compute core group matches the target computing resource size.

The at least one second compute core group refers to one or more compute core groups corresponding to the target number of target virtual function resources; that is, the at least one second compute core group refers to one or more compute core groups that have a direct connection relationship with the target number of target virtual function resources.

The at least one idle third compute core group refers to one or more unused (or unallocated) compute core groups. The at least one fourth compute core group represents one or more additionally required compute core groups when the at least one second compute core group corresponding to at least one second virtual function resource cannot meet the current demand for computing resources.

The sum of the computing resource sizes of the at least one second compute core group corresponding to the target number of target virtual function resources matching the target computing resource size means that the sum of the computing resource sizes of the at least one second compute core group corresponding to the target number of target virtual function resources is greater than or equal to the target computing resource size; that is, the at least one second compute core group corresponding to the target number of target virtual function resources can meet the current demand for computing resources.

The sum of the computing resource sizes of the at least one second compute core group corresponding to the target number of target virtual function resources not matching the target computing resource size means that the sum of the computing resource sizes of the at least one second compute core group corresponding to the target number of target virtual function resources is less than the target computing resource size; that is, the at least one second compute core group corresponding to the target number of target virtual function resources cannot meet the current demand for computing resources.

The sum of the computing resource sizes of the at least one second compute core group and the at least one fourth compute core group matching the target computing resource size means that the sum of the computing resource sizes of the at least one second compute core group and the at least one fourth compute core group is greater than or equal to the target computing resource size; that is, the at least one second compute core group and the at least one fourth compute core group can meet the current demand for computing resources.

In a feasible implementation manner, in the case where the sum of the computing resource sizes of the at least one second compute core group corresponding to the at least one second virtual function resource matches the target computing resource size, the at least one second compute core group is directly taken as the at least one first compute core group.

In a feasible implementation manner, in the case where the sum of the computing resource sizes of the at least one second compute core group corresponding to the at least one second virtual function resource does not match the target computing resource size, at least one fourth compute core group is first determined from the at least one idle third compute core group, and then the at least one second compute core group and the at least one fourth compute core group together are taken as the at least one first compute core group.

At step 2042b, the target virtual graphics processing unit device is created based on the target number of target virtual function resources and the at least one first compute core group.

In some embodiments, the specific implementation of step 2042b may be: selecting one virtual function resource from the target number of target virtual function resources as a master virtual function resource, and taking the virtual function resources other than the master virtual function resource as slave virtual function resources; creating the target virtual graphics processing unit device based on the at least one first compute core group, the master virtual function resource, and the slave virtual function resources.

In a feasible implementation manner, the specific implementation of "creating the target virtual graphics processing unit device based on the at least one first compute core group, the master virtual function resource, and the slave virtual function resources" may be: integrating target resources of the master virtual function resource, video memory resources of the slave virtual function resources, and computing resources of the at least one first compute core group to obtain the target virtual graphics processing unit device; where the target resources include: registers, configuration information, computing resources, and/or video memory resources.

The master virtual function resource may be represented as a Master VF; the slave virtual function resource may be represented as a Slave VF. Configuration information refers to resources in the configuration space, which characterizes the execution rules of the vGPU.

When creating the target virtual graphics processing unit device (vGPU), the vGPU will occupy all resources of the Master VF, including registers and configuration space resources such as the GPU, Direct Memory Access (DMA), Video registers, and Interrupt registers, and will not utilize the registers and configuration space resources of the Slave VFs; the Slave VFs only provide storage resources for the video memory portion, which essentially corresponds to the VF BAR2 section of most graphics cards supporting the SR-IOV technology.

During implementation, all resources of the Master VF and the video memory resources of the Slave VFs may be integrated into one vGPU via the Host driver software, thus granting this vGPU device the video memory size desired by the user.

In some embodiments, when all virtual function resources share all compute core groups, step 2042 may be implemented through the following step 2042c.

At step 2042c, in the case where the association relationship is that all virtual function resources share all compute core groups, the target virtual graphics processing unit device is created based on the target number of target virtual function resources.

When all virtual function resources share all compute core groups, there is no need to allocate computing resources; and therefore, the target virtual graphics processing unit device may be directly created based on the target number of target virtual function resources.

In some embodiments, the specific implementation of step 2042c may be: selecting one virtual function resource from the target number of target virtual function resources as a master virtual function resource, and taking the virtual function resources other than the master virtual function resource as slave virtual function resources; creating the target virtual graphics processing unit device based on the master virtual function resource and the slave virtual function resources.

In a feasible implementation manner, the specific implementation of "creating the target virtual graphics processing unit device based on the master virtual function resource and the slave virtual function resources" may be: integrating target resources of the master virtual function resource and video memory resources of the slave virtual function resources to obtain the target virtual graphics processing unit device, where the target resources include registers, configuration information, computing resources, and/or video memory resources.

It should be noted that the operation of "creating the target virtual graphics processing unit device based on the master virtual function resource and the slave virtual function resources" here is similar to the operation of "creating the target virtual graphics processing unit device based on the at least one first compute core group, the master virtual function resource, and the slave virtual function resources" in the above step 2042b. During implementation, reference may be made to the descriptions in 2042b above, and details will not be repeated here.

In the embodiments of the present disclosure, under the SR-IOV technology, by installing virtualization driver software onto a computer device, the computer device can execute the method for allocating virtual resources of the embodiments of the present disclosure. Upon receiving a virtual resource creation request, the computer device determines a target number of target virtual function resources (VFs) that meet the virtual resource creation request from a virtual function resource pool, creates a target virtual graphics processing unit device based on the target number of target virtual function resources, and then allocates the target virtual graphics processing unit device to a target virtual machine. In this way, under the SR-IOV technology, target virtual graphics processing unit devices with different video memory resource sizes (video memory resources provided by VFs) can be created according to the virtual resource acquisition requirement, meeting the diverse needs of different virtual machines for video memory resources provided by VFs. In related technologies, modifying the video memory resource size corresponding to a VF requires shutting down all virtual machines and rebooting the server; whereas the embodiments of the present disclosure integrate a target number of target virtual function resources to obtain a target virtual graphics processing unit device that meets the virtual resource creation requirement. This entire process may be completed without stopping the operation of all virtual machines and rebooting the server, and the video memory capacities of the different created target virtual graphics processing unit devices can coexist on the same graphics card.

The following describes the application of the method for allocating virtual resources according to the embodiments of the present disclosure in actual scenarios.

The present disclosure proposes a method for allocating vGPU dynamic resources (the aforementioned method for allocating virtual resources) for the field of SR-IOV virtualization, applied to the field of GPU virtualization. This method aims to solve the following technical problems: first, under the SR-IOV technical framework, because Virtual Functions (VFs) do not support unequal video memory partitioning, all vGPUs obtained by users only have a fixed video memory capacity; second, under the SR-IOV technical framework, modifying the VF video memory capacity requires shutting down all virtual machines or even rebooting the server.

To overcome the aforementioned shortcomings under the existing SR-IOV technical framework-such as vGPUs not supporting unequal video memory partitioning, and modifying VF video memory capacity requiring a server reboot-the present disclosure provides a method for allocating vGPU dynamic resources based on the SR-IOV technology at the driver software level. The present disclosure implements the method using the following technical solution.

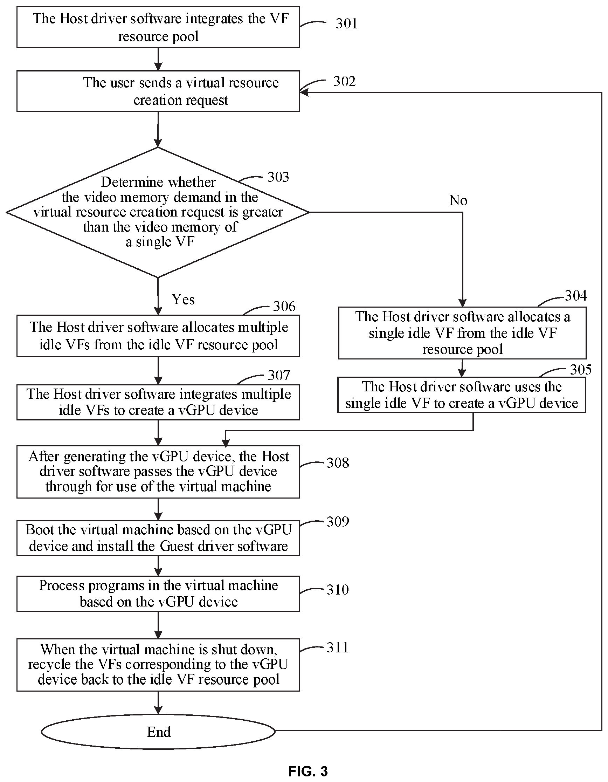

The vGPU virtualization driver software is divided into Host driver software and Guest driver software. The Host driver software is installed in the Virtual Machine Monitor (VMM), and the Guest driver software is installed in the virtual machine (Guest). The present disclosure focuses on the design of the Host driver software, mentioning the Guest driver software only in the final part. The flowchart of the design is shown in FIG. 3, which includes the following steps 301 to 311.

At step 301, the Host driver software integrates the VF resource pool.

During the initialization phase, the Host driver software acquires all VF information that the current graphics card supporting a SR-IOV technology has and establishes a VF resource pool by using the information. Here, used resources and idle resources may be marked, referred to respectively as a used VF resource pool and an idle VF resource pool.

Further, the VF resource description structure in the VF resource pool contains information such as whether the VF is already occupied by a vGPU, which graphics card the VF belongs to, which Physical Function (PF) controls the VF, and which compute core group in the chip microarchitecture the VF is connected to. Due to the special chip microarchitecture of the graphics card, which contains multiple compute core groups internally, there are generally two connection modes. The first mode is that different VFs are bound to different compute core groups. In this case, the driver program will also record the information binding the VF to the core group in the VF resource description structure, and simultaneously, computing power needs to be allocated to the vGPU during the dynamic allocation of VF resources. The second mode is that all VFs share all compute core groups. In this case, the driver program does not need to consider the issue of computing power allocation when combining VF resources.

Further, in a chip scheme where VFs are bound to different compute core groups, the allocation of computing power resources needs to be considered when integrating dynamic allocation of VF resources; that is, to avoid a situation where all VFs bound to a compute core group are occupied as Slave VFs, rendering this compute core group unable to be enabled.

At step 302, a user sends a virtual resource creation request.

The user may send a virtual resource creation request through specific software combined with parameters, to inform the Host driver software of how many GBs of vGPU video memory the user desires to create in the designated graphics card.

At step 303, whether the video memory demand in the virtual resource creation request is greater than the video memory of a single VF is determined.

The Host driver software acquires the vGPU video memory size that the user desires to create and determines whether multiple VFs need to be fused within the Host driver software. If the vGPU video memory size that the user needs to create exceeds the video memory size that a single VF can provide, the process proceeds to step 306 through step 307. If the vGPU video memory size that the user needs does not exceed the video memory size that a single VF can provide, the process proceeds to step 304 through step 305.

At step 304, the Host driver software allocates a single idle VF from the idle VF resource pool.

The single idle VF acts as the Master VF, while the Slave VF portion is empty.

At step 305, the Host driver software create a vGPU device by using the single idle VF.

At step 306, the Host driver software allocates multiple idle VFs from the idle VF resource pool.

The Host driver software determines through calculation how many VFs' video memory is required to meet the vGPU to be created. According to the rule of equally dividing the computing power of physical compute core groups, the Host driver software selects the required VFs from the idle VF resource pool, chooses the first among these selected VFs as the Master VF, and designates the rest as Slave VFs.

At step 307, the Host driver software integrates multiple idle VFs to create a vGPU device.

The Host driver software creates a vGPU device that will occupy all resources of the Master VF, including registers and configuration space resources such as GPU, DMA, Video, and Interrupt, but will not use the aforementioned registers and configuration space resources of the Slave VFs. The Slave VFs only provide storage resources for the video memory portion, i.e., the VF BAR2 portion of most graphics cards supporting the SR-IOV technology.

At step 308, after generating the vGPU device, the Host driver software passes the vGPU device through to virtual machine for use.

The Host driver software integrates all resources of the Master VF and the video memory resources of the Slave VFs into one vGPU. This vGPU device then has the video memory size desired by the user, and passing this vGPU device through to the virtual machine allows it to be used normally.

Further, after the Host driver software integrates the VF video memory resources, the Host driver software will generate a vGPU device based on the Mediated VFIO framework. This vGPU device may be passed through to the virtual machine via the VFIO-PCI module.

At step 309, the virtual machine is booted and the Guest driver software is installed, based on the vGPU device.

The vGPU device will be recognized within the virtual machine as a fully functional vGPU device. After properly installing the Guest driver software, all capabilities provided by this vGPU device may be utilized.

At step 310, a program in the virtual machine is processed based on the vGPU device.

At step 311, when the virtual machine is shut down, the VFs corresponding to the vGPU device is recycled to the idle VF resource pool.

When the user deletes this vGPU device, all VF resources occupied by this vGPU device will be recycled by the Host driver software and placed back into the idle VF resource pool.

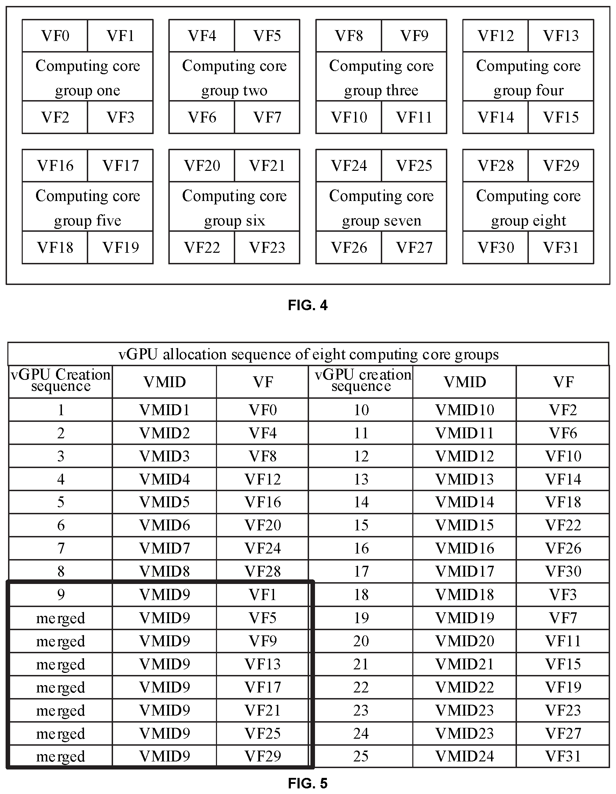

In the embodiments of the present disclosure, the physical connection relationship between VFs and compute core groups within the chip microarchitecture may be as shown in FIG. 4. The graphics card in FIG. 4 has 32GB of video memory and 32 VFs, with each VF occupying 1GB of video memory. There are 8 compute core groups in the graphics card chip, and every 4 VFs are fixedly connected to one compute core group. Specifically, VF0~VF3 are fixedly connected to the first physical compute core group in the chip, VF4~VF7 are fixedly connected to the second physical compute core group in the chip, VF8~VF11 are fixedly connected to the third physical compute core group in the chip, VF12~VF15 are fixedly connected to the fourth physical compute core group in the chip, VF16~VF19 are fixedly connected to the fifth physical compute core group in the chip, VF20~VF23 are fixedly connected to the sixth physical compute core group in the chip, VF24~VF27 are fixedly connected to the seventh physical compute core group in the chip, and VF28~VF31 are fixedly connected to the eighth physical compute core group in the chip.

The Host driver software in the embodiments of the present disclosure will dynamically integrate the VFs of the graphics card shown in FIG. 4. Without the need to shut down all virtual machines or reboot the server, a vGPU with the user-specified video memory size is created to meet the user demand. This process can include the following steps S1 to S7.

S1: During the initialization phase, the Host driver software acquires information on all 32 VFs that the graphics card has. The Host driver software establishes a VF resource pool, by using the information, used resources and idle resources are marked in VF resource pool, respectively referred to as the used VF resource pool and the idle VF resource pool.

S2: The user informs, through execution of specific software combined with parameters, the Host driver program that the user desires to create a vGPU with 8GB of video memory in the designated graphics card.

S3: The Host driver software acquires that the vGPU video memory size that the user desires to create is 8GB, and calculates that 8 VF resources need to be fused within the driver software to meet the user demand for 8GB of vGPU video memory.

S4: According to the rule of maximally and equally dividing the computing power of physical compute core groups, the Host driver software selects the required 8 VFs from the idle VF resource pool. Among these selected VFs, one is arbitrarily selected as the Master VF and the rest are taken as Slave VFs.

As shown in FIG. 5, the vGPUs created by the user in the 1st to 8th times each require 1GB of video memory; at this time, simply allocating the entire integral space resources of a VF to the vGPU is sufficient. When the 9th vGPU created by the user requires 8GB of video memory, it needs to occupy not only VF1 but also the video memory resources of the subsequent VF5, VF9, VF13, VF17, VF21, VF25, and VF29.

S5: The Host driver software creates the vGPU. This vGPU will occupy the Master VF, meaning this vGPU will occupy all resources of VF1 in FIG. 5, including registers and configuration space resources such as GPU, DMA, Video, and Interrupt, and will not use the aforementioned registers and configuration space resources of the Slave VFs. The Slave VFs, which are VF5, VF9, VF13, VF17, VF21, VF25, and VF29 in FIG. 5, only provide the storage resources of the video memory portion.

S6: The Host driver software integrates all resources of the Master VF and the video memory resources of the Slave VFs into a single vGPU. This device then has the video memory size of 8GB desired by the user, and the device may be passed through to the virtual machine for use via the VFIO-PCI framework. Specifically, after the driver software integrates the VF video memory resources, the driver software will generate a virtual vGPU device based on the Mediated VFIO framework. This virtual device has a full function and may be passed through to the virtual machine via the VFIO-PCI module. In the virtual machine world, a fully functional graphics card will be seen, and all functions of this graphics card may be used after correctly installing the Guest driver program.

S7: When the virtual machine is shut down and the user deletes the vGPU, the 8 VF resources occupied by the vGPU will be recycled by the Host driver software and placed back into the idle VF resource pool. The user's complete usage cycle ends, and the process is re-entered only when the user creates a vGPU again.

The embodiments of the present disclosure have at least the following innovation points: 1) a vGPU resource integration method is proposed under the circumstance of a fixed VF video memory capacity; 2) under the SR-IOV technology, the resource integration method can be completed based on Host driver software t without rebooting the server or stopping all virtual machines.

The embodiments of the present disclosure can achieve at least the following technical effects: 1) the required vGPU video memory capacity can be adjusted according to the user demand; 2) the vGPU video memory capacity may be adjusted without rebooting the server or stopping all virtual machines; 3) different vGPU video memory capacities can coexist on the same graphics card.

It should be noted that the VF video memory size in the embodiments of the present disclosure can be flexibly allocated, meeting the user demand for multi-capacity usage, mixed usage of different capacities, and convenient switching of vGPUs. Compared to purely using an SR-IOV scheme, this scheme provides advantages such as convenient switching, mixed usage of different capacities, and multi-capacity support.

Based on the foregoing embodiments, an embodiment of the present disclosure provides an apparatus for allocating virtual resources. The apparatus includes the included units, and the various modules included in each unit, which may be implemented by a processor in a computer device; certainly, they can also be implemented through specific logic circuits. During implementation, the processor may be a Central Processing Unit (CPU), a Microprocessor Unit (MPU), a Digital Signal Processor (DSP), or a Field Programmable Gate Array (FPGA), etc.

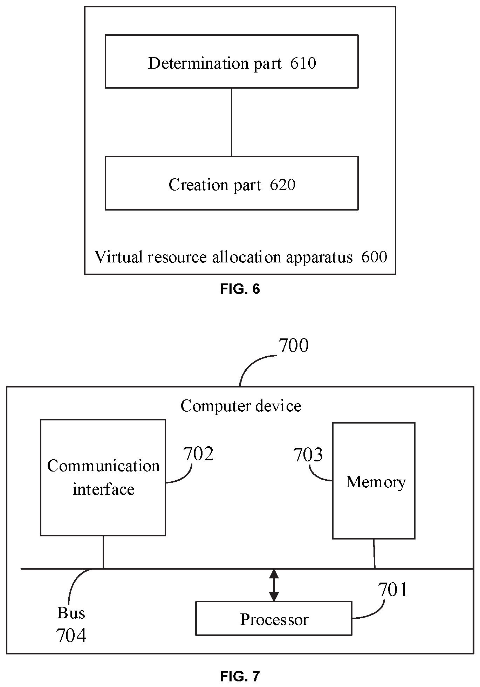

FIG. 6 is a structural schematic diagram of an apparatus for allocating virtual resources according to an embodiment of the present disclosure. As shown in FIG. 6, the apparatus for allocating virtual resources 600 includes: a determination part 610 and a creation part 620.

The determination part 610 is configured to determine, in response to a virtual resource creation request, a target number of target virtual function resources that meet the virtual resource creation request from a virtual function resource pool, where the virtual function resources in the virtual function resource pool are located on a graphics card supporting a Single Root Input/Output Virtualization technology.

The creation part 620 is configured to create a target virtual graphics processing unit device based on the target number of target virtual function resources, and run a target virtual machine based on the target virtual graphics processing unit device.

In some embodiments, the determination part 610 may specifically be configured to: determine virtual function resource information that the graphics card supporting the Single Root Input/Output Virtualization technology has; and construct the virtual function resource pool based on the virtual function resource information.

In some embodiments, the virtual function resource information corresponds to at least one first virtual function resource, and the virtual function resource pool includes a used resource pool and an idle resource pool; the determination part 610 may specifically be configured to divide: based on the usage status of each first virtual function resource, each virtual function resource into a used first virtual function resource set and an unused second virtual function resource set; determine, based on the first virtual function resource set and the second virtual function resource set, the used resource pool and the idle resource pool; where the virtual function resources in the first virtual function resource set are marked with a used state, and the virtual function resources in the second virtual function resource set are marked with an unused state.

In some embodiments, the determination part 610 may specifically be configured to: mark each virtual function resource in the first virtual function resource set with a first identifier, where the first identifier indicates that a corresponding virtual function resource has been used; mark each virtual function resource in the second virtual function resource set with a second identifier, where the second identifier indicates that a corresponding virtual function resource is unused; take the marked first virtual function resource set as the used resource pool; and take the marked second virtual function resource set as the idle resource pool.

In some embodiments, the virtual function resource pool includes an idle resource pool, and the virtual resource creation request includes a target video memory resource size; the determination part 610 may specifically be configured to: determine a video memory resource size of a single virtual function resource; determine, based on the video memory resource size of the single virtual function resource and the target video memory resource size, the target number; determine the target number of virtual function resources from the idle resource pool as the target number of target virtual function resources; where a sum of the sizes of the target number of target virtual function resources matches the target video memory resource size.

In some embodiments, the creation part 620 may specifically be configured to: determine an association relationship between the virtual function resources and the compute core groups; and create the target virtual graphics processing unit device based on the association relationship and the target number of target virtual function resources.

In some embodiments, the virtual resource creation request includes a target computing resource size; the creation part 620 may specifically be configured to: in a case where the association relationship indicates that different virtual function resources are connected to different compute core groups, determine at least one first compute core group matching the target computing resource size; and create the target virtual graphics processing unit device based on the target number of target virtual function resources and the at least one first compute core group.

In some embodiments, the creation part 620 may specifically be configured to: determine a sum of the computing resource sizes of at least one second compute core group corresponding to the target number of target virtual function resources; in a case where the sum of the computing resource sizes of the at least one second compute core group matches the target computing resource size, take the at least one second compute core group as the at least one first compute core group; in a case where the sum of the computing resource sizes of the at least one second compute core group does not match the target computing resource size, determine at least one fourth compute core group from at least one idle third compute core group, and take the at least one second compute core group and the at least one fourth compute core group as the at least one first compute core group; where a sum of the computing resource sizes of the at least one second compute core group and the at least one fourth compute core group matches the target computing resource size.

In some embodiments, the creation part 620 may specifically be configured to: in a case where the association relationship indicates that all virtual function resources share all compute core groups, create the target virtual graphics processing unit device based on the target number of target virtual function resources.

In some embodiments, the creation part 620 may specifically be configured to: select one virtual function resource from the target number of target virtual function resources as a master virtual function resource, and take the virtual function resources other than the master virtual function resource as slave virtual function resources; and create the target virtual graphics processing unit device based on the master virtual function resource and the slave virtual function resources.

In some embodiments, the creation part 620 may specifically be configured to: integrate target resources of the master virtual function resource and video memory resources of the slave virtual function resources to obtain the target virtual graphics processing unit device; where the target resources include at least one of the following: registers, configuration information, computing resources, or video memory resources.

In some embodiments, the creation part 620 may specifically be configured to: pass the target virtual graphics processing unit device through to the target virtual machine via a passthrough component, so as to run a program of the target virtual machine based on the target virtual graphics processing unit device.

In some embodiments, the determination part 610 may specifically be configured to: determine a resource description of each first virtual function resource; wherein the resource description includes at least one of a location, a usage status, a control status, or a connection status of each first virtual function resource; and describe each virtual function resource in the virtual function resource pool according to the resource description of each virtual function resource.

The descriptions of the above apparatus embodiments are similar to the descriptions of the above method embodiments and have similar beneficial effects as the method embodiments. In some embodiments, the functions of or the modules included in the apparatus provided by the embodiments of the present disclosure may be used to execute the methods described in the above method embodiments. For technical details not disclosed in the apparatus embodiments of the present disclosure, please refer to the descriptions of the method embodiments of the present disclosure for understanding.

It should be noted that, in the embodiments of the present disclosure, if the aforementioned method for allocating virtual resources is implemented in the form of a software functional module and sold or used as an independent product, it can also be stored in a computer-readable storage medium. Based on this understanding, the technical solutions of the embodiments of the present disclosure essentially, or the part contributing to related technologies, may be embodied in the form of a software product. This software product is stored in a storage medium and includes several instructions to enable a computer device (which may be a personal computer, a server, or a network device, etc.) to execute all or part of the methods described in the various embodiments of the present disclosure. The aforementioned storage medium includes various media capable of storing program codes, such as a USB flash drive, a mobile hard disk, a Read-Only Memory (ROM), a magnetic disk, or an optical disk. In this way, the embodiments of the present disclosure are not limited to any specific hardware, software, or firmware, or any combination thereof.

An embodiment of the present disclosure provides a computer device, including a memory and a processor. The memory stores a computer program executable on the processor, and the processor when executing the program, is configured to implement some or all of the steps in the above methods.

An embodiment of the present disclosure provides a computer-readable storage medium on which a computer program is stored. The computer program, when executed by a processor, implements some or all of the steps in the above methods. The computer-readable storage medium may be transitory or non-transitory.

An embodiment of the present disclosure provides a computer program, including computer-readable code. The computer-readable code, when running in a computer device, causes a processor in the computer device to execute partial or all steps for implementing the above methods.

An embodiment of the present disclosure provides a computer program product. The computer program product includes a non-transitory computer-readable storage medium storing a computer program. The computer program, when read and executed by a computer, implements some or all of the steps in the above methods. The computer program product may be specifically implemented by means of hardware, software, or a combination thereof. In some embodiments, the computer program product is specifically embodied as a computer storage medium; in other embodiments, the computer program product is specifically embodied as a software product, such as a Software Development Kit (SDK), etc.

It should be pointed out here that the above descriptions of various embodiments tend to emphasize the differences between them; for similarities or identical parts, they may be referenced mutually. The descriptions of the above device, storage medium, computer program, and computer program product embodiments are similar to the descriptions of the above method embodiments and have similar beneficial effects. For technical details not disclosed in the device, storage medium, computer program, and computer program product embodiments of the present disclosure, please refer to the descriptions of the method embodiments of the present disclosure for understanding.

It should be noted that FIG. 7 is a schematic hardware entity diagram of a computer device in an embodiment of the present disclosure. As shown in FIG. 7, the hardware entity of the computer device 700 includes: a processor 701, a communication interface 702, and a memory 703.

The processor 701 is configured to generally control overall operations of the computer device 700.

The communication interface 702 enables the computer device to communicate with other terminal(s) or server(s) via a network.

The memory 703 is configured to store instructions and applications executable by the processor 701, and can also cache data to be processed or already processed by the processor 701 and various modules in the computer device 700 (e.g., image data, audio data, voice communication data, and video communication data). The memory 703 may be implemented via Flash memory (FLASH) or Random Access Memory (RAM). Data transmission between the processor 701, the communication interface 702, and the memory 703 may be conducted via a bus 704.

It should be understood that references to "one embodiment" or "an embodiment" throughout this specification mean that a particular feature, structure, or characteristic related to the embodiment is included in at least one embodiment of the present disclosure. Therefore, the appearances of "in one embodiment" or "in an embodiment" in various places throughout the specification do not necessarily all refer to the same embodiment. Furthermore, these particular features, structures, or characteristics may be combined in any suitable manner in one or more embodiments. It should be understood that in various embodiments of the present disclosure, the sequence numbers of the above processes do not imply an order of execution. The execution order of each process should be determined by its function and inherent logic, and should not constitute any limitation on the implementation processes of the embodiments of the present disclosure. The sequence numbers in the above embodiments of the present disclosure are merely for description and do not represent a preference of the embodiments.

It should be noted that, herein, the terms "include", "comprise", or any other variations thereof are intended to cover a non-exclusive inclusion, such that a process, method, article, or apparatus that includes a list of elements does not include only those elements but may include other elements not expressly listed or inherent to such process, method, article, or apparatus. Without further limitation, an element defined by the phrase "including a..." does not exclude the presence of additional identical elements in the process, method, article, or apparatus that includes the element.

Among the several embodiments provided by the present disclosure, it should be understood that the disclosed device and method may be implemented in other ways. The device embodiments described above are merely illustrative. For example, the division of the units is only a logical function division; in actual implementation, there may be other division methods, such as multiple units or components being combined or integrated into another system, or some features being ignored or not executed. In addition, the displayed or discussed mutual couplings, direct couplings, or communication connections may be implemented through some interfaces. The indirect couplings or communication connections between devices or units may be electrical, mechanical, or in other forms.

The units described as separate components may or may not be physically separated, and the components displayed as units may or may not be physical units; they may be located in one place or distributed over multiple network units. Part or all of the units may be selected according to actual needs to achieve the objectives of the solutions of the present embodiments.

In addition, the functional units in the various embodiments of the present disclosure may all be integrated into one processing unit, or each unit may serve as an individual independent unit, or two or more units may be integrated into one unit. The above integrated units may be implemented in the form of hardware, or in the form of hardware plus software functional units.

Those of ordinary skill in the art can understand: all or part of the steps implementing the above method embodiments may be completed by hardware related to program instructions. The aforementioned program may be stored in a computer-readable storage medium. When the program is executed, it executes the steps comprising the above method embodiments; and the aforementioned storage medium includes: various media that can store program codes, such as a removable storage device, a Read-Only Memory (ROM), a magnetic disk, or an optical disk.

Alternatively, if the integrated units of the present disclosure are implemented in the form of a software functional module and sold or used as an independent product, they can also be stored in a computer-readable storage medium. Based on this understanding, the technical solutions of the present disclosure essentially, or the part contributing to related technologies, may be embodied in the form of a software product. This computer software product is stored in a storage medium and includes several instructions to enable a computer device (which may be a personal computer, a server, or a network device, etc.) to execute all or part of the methods described in the various embodiments of the present disclosure. The aforementioned storage medium includes: various media that can store program codes, such as a removable storage device, a ROM, a magnetic disk, or an optical disk.

The above are only the specific implementation modes of the present disclosure, but the scope of protection of the present disclosure is not limited thereto. Any person skilled in the art can easily think of changes or substitutions within the technical scope disclosed by the present disclosure, and all such changes or substitutions should be covered within the scope of protection of the present disclosure.

### Industrial Applicability

The embodiments of the present disclosure provide a method and apparatus for allocating virtual resources, a computer device, a computer-readable storage medium, and a computer program product. The image processing method comprises: in response to a virtual resource creation request, determining a target number of target virtual function resources that meet the virtual resource creation request from a virtual function resource pool; where the virtual function resources in the virtual function resource pool are located on a graphics card supporting a Single Root Input/Output Virtualization technology; creating a target virtual graphics processing unit device based on the target number of target virtual function resources, and running a target virtual machine based on the target virtual graphics processing unit device. The above scheme is capable of meeting the diverse needs of different virtual machines for video memory resources provided by VFs, and the entire process may be completed without shutting down all virtual machines and rebooting the server.

## Claims

1. A method for allocating virtual resources, comprising:
determining, in response to a virtual resource creation request, a target number of target virtual function resources that meet the virtual resource creation request from a virtual function resource pool, wherein the virtual function resources in the virtual function resource pool are located on a graphics card supporting a Single Root Input/Output Virtualization technology; and
creating a target virtual graphics processing unit device based on the target number of target virtual function resources, and running a target virtual machine based on the target virtual graphics processing unit device.

2. The method for allocating virtual resources according to claim 1, further comprising:
determining virtual function resource information that the graphics card supporting the Single Root Input/Output Virtualization technology has; and
constructing the virtual function resource pool based on the virtual function resource information.

3. The method for allocating virtual resources according to claim 2, wherein the virtual function resource information corresponds to at least one first virtual function resource, and the virtual function resource pool comprises a used resource pool and an idle resource pool;
wherein constructing the virtual function resource pool based on the virtual function resource information comprises:
dividing, based on a usage status of each first virtual function resource, each first virtual function resource into a used first virtual function resource set and an unused second virtual function resource set; and
determining, based on the first virtual function resource set and the second virtual function resource set, the used resource pool and the idle resource pool, wherein virtual function resources in the first virtual function resource set are marked with a used state, and virtual function resources in the second virtual function resource set are marked with an unused state.

4. The method for allocating virtual resources according to claim 3, wherein determining, based on the first virtual function resource set and the second virtual function resource set, the used resource pool and the idle resource pool comprises:
marking each virtual function resource in the first virtual function resource set with a first identifier; wherein the first identifier indicates that a corresponding virtual function resource has been used;
marking each virtual function resource in the second virtual function resource set with a second identifier; wherein the second identifier indicates that a corresponding virtual function resource is unused;
taking the marked first virtual function resource set as the used resource pool; and
taking the marked second virtual function resource set as the idle resource pool.

5. The method for allocating virtual resources according to any one of claims 1 to 4, wherein the virtual function resource pool comprises an idle resource pool, and the virtual resource creation request comprises a target video memory resource size;
wherein determining the target number of target virtual function resources that meet the virtual resource creation request from the virtual function resource pool comprises:
determining a video memory resource size of a single virtual function resource;
determining, based on the video memory resource size of the single virtual function resource and the target video memory resource size, the target number; and
determining the target number of virtual function resources from the idle resource pool as the target number of target virtual function resources, wherein a sum of the sizes of the target number of target virtual function resources matches the target video memory resource size.

6. The method for allocating virtual resources according to any one of claims 1 to 5, wherein creating the target virtual graphics processing unit device based on the target number of target virtual function resources comprises:
determining an association relationship between the virtual function resources and compute core groups; and
creating, based on the association relationship and the target number of target virtual function resources, the target virtual graphics processing unit device.

7. The method for allocating virtual resources according to claim 6, wherein the virtual resource creation request comprises a target computing resource size;
wherein creating, based on the association relationship and the target number of target virtual function resources, the target virtual graphics processing unit device comprises:
in a case where the association relationship indicates that different virtual function resources are connected to different compute core groups, determining at least one first compute core group matching the target computing resource size; and
creating, based on the target number of target virtual function resources and the at least one first compute core group, the target virtual graphics processing unit device.

8. The method for allocating virtual resources according to claim 7, wherein determining the at least one first compute core group matching the target computing resource size comprises:
determining a sum of computing resource sizes of at least one second compute core group corresponding to the target number of target virtual function resources; and
in a case where the sum of the computing resource sizes of the at least one second compute core group matches the target computing resource size, taking the at least one second compute core group as the at least one first compute core group;
in a case where the sum of the computing resource sizes of the at least one second compute core group does not match the target computing resource size, determining at least one fourth compute core group from at least one idle third compute core group, and taking the at least one second compute core group and the at least one fourth compute core group as the at least one first compute core group, wherein a sum of the computing resource sizes of the at least one second compute core group and the at least one fourth compute core group matches the target computing resource size.

9. The method for allocating virtual resources according to claim 6, wherein creating, based on the association relationship and the target number of target virtual function resources, the target virtual graphics processing unit device comprises:
in a case where the association relationship indicates that all virtual function resources share all compute core groups, creating, based on the target number of target virtual function resources, the target virtual graphics processing unit device.

10. The method for allocating virtual resources according to any one of claims 1 to 9, wherein creating the target virtual graphics processing unit device based on the target number of target virtual function resources comprises:
selecting one virtual function resource from the target number of target virtual function resources as a master virtual function resource, and taking virtual function resources other than the master virtual function resource as slave virtual function resources; and
creating, based on the master virtual function resource and the slave virtual function resources, the target virtual graphics processing unit device.

11. The method for allocating virtual resources according to claim 10, wherein creating, based on the master virtual function resource and the slave virtual function resources, the target virtual graphics processing unit device comprises:
integrating target resources of the master virtual function resource and video memory resources of the slave virtual function resources to obtain the target virtual graphics processing unit device, wherein the target resources comprise at least one of registers, configuration information, computing resources, or video memory resources.

12. The method for allocating virtual resources according to any one of claims 1 to 11, wherein running, based on the target virtual graphics processing unit device, the target virtual machine comprises:
passing the target virtual graphics processing unit device through to the target virtual machine via a passthrough component, so as to run a program of the target virtual machine based on the target virtual graphics processing unit device.

13. The method for allocating virtual resources according to claim 3 or 4, further comprising:
determining a resource description of each first virtual function resource, wherein the resource description comprises at least one of a location, a usage status, a control status, or a connection status of each first virtual function resource; and
describing each virtual function resource in the virtual function resource pool according to the resource description of each virtual function resource.

14. A apparatus for allocating virtual resources, the apparatus for allocating virtual resources comprising:
a determination part, configured to determine, in response to a virtual resource creation request, a target number of target virtual function resources that meet the virtual resource creation request from a virtual function resource pool, wherein the virtual function resources in the virtual function resource pool are located on a graphics card supporting a Single Root Input/Output Virtualization technology; and
a creation part, configured to create a target virtual graphics processing unit device based on the target number of target virtual function resources, and run a target virtual machine based on the target virtual graphics processing unit device.

15. A computer device, comprising a memory and a processor, wherein the memory stores a computer program executable on the processor, and the processor, when executing the program, is configured to implement steps of the method according to any one of claims 1 to 13.

16. A computer-readable storage medium, having a computer program stored thereon, wherein the computer program, when executed by a processor, implements steps of the method according to any one of claims 1 to 13.

17. A computer program product, comprising a non-transitory computer-readable storage medium storing a computer program, wherein the computer program, when read and executed by a computer, implements steps of the method according to any one of claims 1 to 13.
